# FASCICULE DE BREVET EUROPEEN

(11) **EP 2 350 464 B1**
(45) Date de publication et mention de la délivrance du brevet: **10.10.2012**
(21) Numéro de dépôt: 09760183.5
(22) Date de dépôt: 21.10.2009
(51) Int. Cl.: F15B 15/19, F15B 15/26

(54) **VERIN A COURSE DECLENCHEE POUR SYSTEME DE SECURITE**
ZYLINDER MIT HUBAKTIVIERUNG FÜR EIN SICHERHEITSSYSTEM
TRIGGERED-TRAVEL JACK FOR A SAFETY SYSTEM

(30) Priorité: 28.10.2008 FR 0857317
(43) Date de publication de la demande: 03.08.2011
(73) Titulaire: HERAKLES, 33185 Le Haillan (FR)
(72) Inventeur: BORG, Evrard, F-33600 Pessac (FR); LASPESA, Eric, F-84210 Althen des Paluds (FR); NADEAU, Jean-Paul, F-33160 Saint Médard en Jalles (FR)
(74) Mandataire: Barbin le Bourhis, Joël
(86) Numéro de dépôt international: PCT/FR2009/052009
(87) Numéro de publication internationale: WO 2010/049625

(56) Documents cités:
- WO-A-2005/085014
- FR-A- 2 878 212
- US-A- 3 186 163
- US-A- 4 860 698

## Description

L'invention se rapporte à un vérin à course déclenchée notamment destiné à être intégré à un système de sécurité d'un véhicule automobile, plus particulièrement un système permettant de protéger un piéton en cas de choc frontal avec le véhicule automobile, en provoquant le soulèvement du capot. L'invention concerne un perfectionnement d'un tel vérin consistant en un verrouillage du piston dans sa position d'origine, afin de maintenir fermement en position la pièce mécanique connectée à la tige du vérin, tout en permettant un déverrouillage du piston, sans ordre ajouté, lors du déclenchement du vérin.

On connaît de nombreux systèmes de sécurité pour la protection d'un piéton lorsque celui-ci est percuté par un véhicule automobile. Par exemple, le document FR 2 878 212 décrit un système comprenant un mécanisme permettant de soulever rapidement le capot du véhicule automobile en cas de collision. En effet, en cas de collision, la tête du piéton heurte fréquemment le capot du véhicule. Ce choc provoque des déformations du capot. Au-delà d'une certaine déformation le capot entre en contact avec le bloc moteur et toutes les pièces rigides qui l'entoure. C'est à ce moment que la tête du piéton subit la plus forte décélération pouvant engendrer de graves séquelles. C'est pourquoi le système décrit dans le document mentionné ci-dessus est conçu pour soulever brusquement le capot d'une certaine hauteur de manière à éviter que le piéton et notamment sa tête vienne heurter le bloc moteur après une déformation du capot. Le soulèvement du capot est effectué au niveau de l'arrière de celui-ci, c'est-à-dire du côté du pare-brise, le capot restant fixé mais articulé à l'avant du véhicule automobile.

Ainsi, un tel dispositif de sécurité, s'il est actionné à temps par des moyens de détection appropriés, permet de soulever le capot de 80 mm au moins en un temps très court de l'ordre de 30 ms, après la détection d'un choc imminent.

De multiples perfectionnements visant à améliorer le comportement de ce type de système de sécurité et particulièrement le comportement du vérin d'actionnement, ont été décrits. On peut citer notamment des perfectionnements visant le retour amorti du capot en cas de choc, la possibilité de repositionner le capot en cas de déclenchement non suivi de collision et l'amortissement du mouvement du piston en fin de course de déclenchement, pour éviter d'endommager le mécanisme auquel le vérin est raccordé.

On cherche, dans la mesure du possible, à intégrer tous ces perfectionnements au vérin lui-même.

Dans cet esprit, une autre préoccupation des concepteurs est d'assurer un bon verrouillage du piston du vérin (dans sa position initiale, avant déclenchement) et par conséquent de la tige de piston qui fait saillie à l'extrémité du vérin et qui est liée au mécanisme de soulèvement du capot ou au capot lui-même en cas de liaison directe. Ce verrouillage permet en effet de maintenir fermement le mécanisme, donc le capot, tant que le système de sécurité n'est pas déclenché. L'intégration de cette fonction de verrouillage dans le corps du vérin lui-même permet des gains d'encombrement et de prix de revient.

Par exemple le document WO 2005/085014 décrit un vérin muni d'un dispositif de verrouillage consistant en des billes agencées circonférentiellement dans une encoche ménagée dans la paroi du corps de vérin. Ces billes sont maintenues radialement par un doigt central relié au piston par un ressort. Les billes sont solidaires du piston du vérin. Dans cette position, le vérin est verrouillé. Pour le fonctionnement du vérin, un percuteur entraîné par un électroaimant vient pousser sur le doigt qui se déplace vers le piston, libérant ainsi les billes de l'encoche circonférentielle et déverrouillant le piston. Ensuite, un gaz sous pression pousse le piston pour le déploiement du vérin. Il est possible de reverrouiller le vérin par action en retour sur la tige du vérin. Ce dispositif présente l'inconvénient de nécessiter un organe particulier commandé (électroaimant et percuteur) uniquement pour déverrouiller le vérin, ce qui le rend complexe et coûteux. De plus, l'usage de billes en tant que moyen de verrouillage demande de nombreux points d'usinage (notamment pour leurs réceptacles) ce qui rend le montage du vérin complexe et peu compatible avec des chaînes robotisées.

L'invention propose une autre solution permettant d'éviter tous ces inconvénients, c'est-à-dire un vérin disposant d'un dispositif de verrouillage interne, facile à assembler, à faible coût, déverrouillable pour le fonctionnement du vérin sans recours à un organe commandé particulier, et éventuellement reverrouillable par action en retour sur la tige du vérin.

Plus précisément, l'invention concerne un vérin à course déclenchée pour système de sécurité comprenant un corps, un piston d'actionnement mobile dans ce corps, des moyens de propulsion dudit piston et un agencement de verrouillage dudit piston coopérant avec une butée interne pour l'immobilisation dudit piston dans une position prédéterminée, caractérisé en ce que cet agencement comprend un loquet sous forme d'une rondelle cylindrique déplaçable vers le piston par lesdits moyens de propulsion dudit vérin pour la libération dudit piston, et au moins une languette flexible rattachée à la périphérie du piston du côté desdits moyens de propulsion, comprenant un crochet en prise avec ladite butée interne et en ce que ledit loquet est déplaçable entre une position arrière où il est adossé audit crochet en engagement avec ladite butée interne et une position avant en direction d'une paroi transversale du piston où il est dégagé dudit crochet.

Selon un mode de réalisation, ledit agencement de verrouillage comporte au moins deux languettes disposées symétriquement par rapport à l'axe de déplacement du piston et formant un guide pour le déplacement du loquet. Par exemple, ces languettes peuvent avoir une surface interne ayant la forme d'une portion de cylindre, ledit loquet, en forme de rondelle épaisse, pouvant coulisser entre ces deux surfaces avant que les languettes se rétractent vers l'intérieur du corps du vérin, au moment de l'actionnement.

Selon un mode de réalisation préféré l'agencement de verrouillage comporte quatre languettes ce qui limite la section d'écoulement des gaz à la périphérie du loquet.

De préférence, lesdits moyens de propulsion sont constitués par un générateur pyrotechnique logé dans le corps.

Ce générateur, lorsqu'il est déclenché assure dans un premier temps le déplacement du loquet et par conséquent le déverrouillage du piston avant de provoquer le déplacement du piston lui-même. La commande du déverrouillage est donc extrêmement simple et n'engendre aucun surcoût.

Selon un mode de réalisation, une telle languette flexible comporte une zone amincie.

Le piston peut comporter une jupe, par exemple cylindrique dont la ou les languettes flexibles constituent un prolongement. Le fond de cette jupe constitue donc une butée contre laquelle le loquet vient s'appliquer en fin de course de déverrouillage.

Si cette butée a une forme tronconique ou analogue, le loquet reste bloqué contre le fond de la jupe du piston en fin de course de déverrouillage. Dans ce cas, le système n'est pas réversible.

En revanche, selon un autre mode de réalisation possible, un ressort est intercalé entre le loquet et le piston pour permettre un reverrouillage de celui-ci après déclenchement.

L'agencement qui vient d'être décrit est remarquable par sa simplicité et son faible prix de revient. Lors de l'assemblage des pièces du vérin, il est possible d'introduire le piston comprenant la ou les languettes, directement dans le corps du vérin jusqu'à ce que le ou les crochets viennent en prise avec la butée interne du corps du vérin. Celle-ci peut être constituée par un simple élargissement du corps du vérin qui immobilise le piston selon un sens de déplacement et par l'extrémité de l'actionneur pyrotechnique qui immobilise le piston dans l'autre sens de déplacement.

Le nombre d'éléments constitutifs est réduit par rapport au dispositif connu.

L'invention sera mieux comprise et d'autres avantages de celle-ci apparaîtront mieux à la lumière de la description qui va suivre de plusieurs modes de réalisation d'un vérin à course déclenchée conforme à son principe, donnée uniquement à titre d'exemple et faite en référence aux dessins annexés dans lesquels :
- la figure 1 est une vue générale schématique partielle en coupe longitudinale, d'un vérin conforme à l'invention avant déclenchement ;
- la figure 2 est une vue en coupe II-II de la figure 1 ;
- la figure 3 est une vue analogue à la figure 1, après déclenchement pyrotechnique ;
- la figure 4 est une vue semblable à la figure 1 illustrant une variante ;
- la figure 5 est une vue analogue à la figure 4 après déclenchement pyrotechnique ;
- la figure 6 est une vue en perspective d'un autre mode de réalisation du piston, muni d'une seule languette ; et
- la figure 7 est une vue en coupe du piston de la figure 6, avec le loquet.

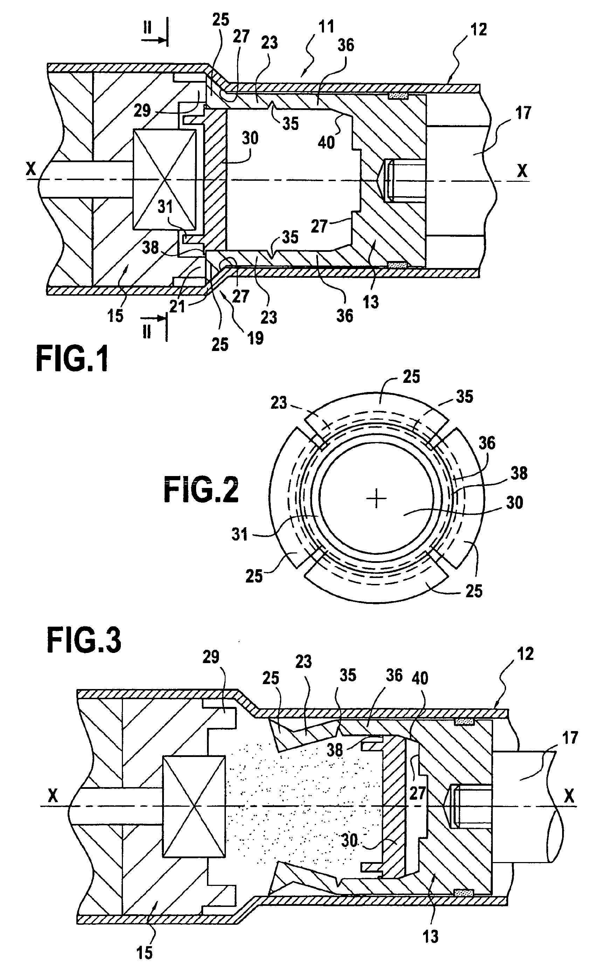

En considérant les figures 1 à 3, on a représenté un mode de réalisation d'un vérin à course déclenchée 11 conforme à l'invention comprenant un corps 12, globalement cylindrique, à piston d'actionnement 13 mobile dans ce corps et des moyens de propulsion du piston constitués par un générateur de gaz à déclenchement pyrotechnique communément appelé générateur pyrotechnique 15.

Le piston se prolonge par une tige 17 qui fait saillie axialement à une extrémité du corps. Cette tige est reliée à un mécanisme de relèvement d'un capot de véhicule automobile, par exemple.

Selon une caractéristique importante, le vérin est équipé d'un agencement de verrouillage 19 du piston, coopérant avec une butée interne 21 pour l'immobilisation du piston 13 dans une position prédéterminée. Cet agencement de verrouillage comporte ici quatre languettes flexibles 23 rattachées à la périphérie du piston du côté des moyens de propulsion. Chaque languette 23 comprend un crochet 25 en prise avec la butée interne. Dans l'exemple, la butée interne est double et constituée par un épaulement conique 27 de la paroi du corps et par une extrémité annulaire avant 29 du générateur pyrotechnique 15. Le crochet de chaque languette flexible se trouve donc engagé, comme représenté, dans un logement annulaire à la périphérie interne du corps délimité par cette double butée 21. La structure de cet agencement de verrouillage rend le montage extrêmement simple puisque le piston peut être introduit par l'extrémité arrière (de plus grand diamètre) du corps du vérin et immobilisé dans celui-ci par la mise en place du générateur pyrotechnique 15.

L'agencement de verrouillage est complété par un loquet 30 situé (avant déclenchement) à l'arrière des languettes 23, au voisinage des deux crochets 25. Ce loquet 30 a la forme d'une simple rondelle cylindrique d'une certaine épaisseur maintenue entre les deux languettes. Il est déplaçable entre une position arrière (représentée sur la figure 1) ou il est adossé auxdits crochets 25 en engagement avec la butée interne annulaire et une position avant (représentée sur la figure 3) ou il est dégagé des crochets et en butée au voisinage de la paroi transversale 27 du piston. Le loquet est déplacé vers cette position par la mise à feu même du générateur pyrotechnique 15. Autrement dit, les moyens de propulsion du piston permettent aussi de déplacer le loquet pour déverrouiller le piston et permettre son déplacement.

Dans l'exemple des figures 1 à 3, le loquet 30 comporte une jupe arrière 31 qui canalise la poussée des gaz au centre du loquet, lors du déclenchement.

Comme représenté, les languettes 23 sont disposées symétriquement deux à deux par rapport à l'axe XX de déplacement du piston et forment donc un guide pour le déplacement du loquet. Les faces internes des deux languettes s'inscrivent en effet dans une même surface cylindrique (figure 2) dont le diamètre correspond à celui du loquet 30. Il est à noter que lors du déclenchement du générateur pyrotechnique 15, le loquet est propulsé vers l'avant avant que la pression des gaz n'ait le temps de s'équilibrer de part et d'autre de celui-ci.

Si l'agencement de verrouillage ne comporte que deux languettes, celles-ci sont aussi symétriques par rapport à l'axe XX. Dans ce cas, la forme du loquet peut être modifiée pour réduire la section d'écoulement des gaz à sa périphérie. Il peut par exemple comporter deux portions périphériques de diamètre plus important correspondant à celui du corps.

Comme représenté, chaque languette 23 comporte avantageusement une zone amincie 35 qui facilite sa flexion pendant la course du piston. Selon l'exemple, la languette peut être raccordée à une jupe arrière 36 cylindrique, du piston par ladite zone amincie elle-même. Dans l'exemple de la figure 1, le loquet comporte une faible nervure arrière 38 par laquelle il est en butée contre les surfaces d'extrémité des deux crochets. Cette nervure est détruite lors du déclenchement.

Par ailleurs, le piston comporte, en regard du loquet, une butée 40 contre laquelle le loquet vient s'appliquer en fin de course de déverrouillage. Dans l'exemple des figures 1 à 3, le système est voulu irréversible, c'est-à-dire sans possibilité de reverrouiller le piston en position initiale après mise à feu du générateur pyrotechnique. C'est pourquoi, la butée 40 a une forme tronconique ou analogue pour provoquer la rétention du loquet en fin de course de déverrouillage.

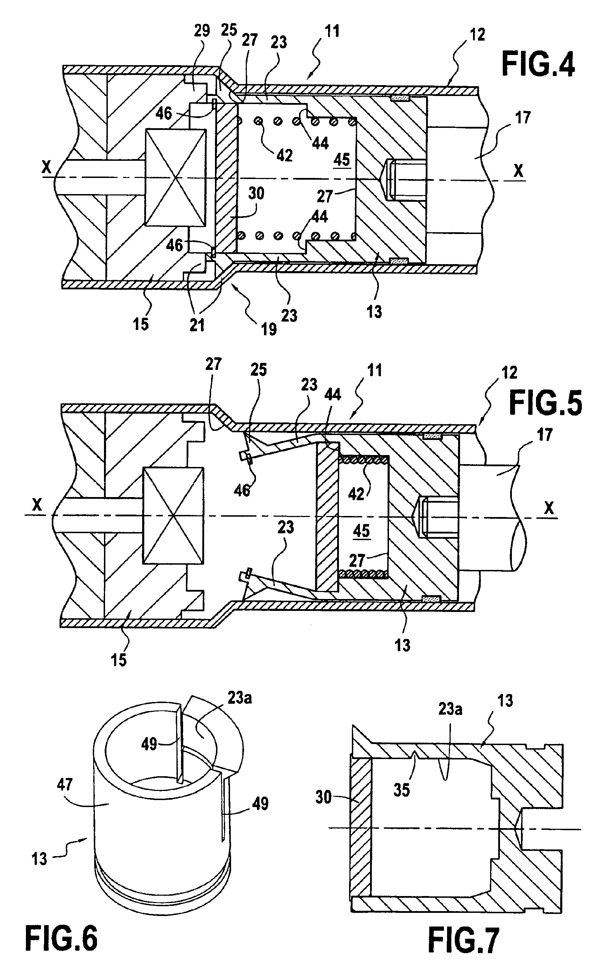

Dans l'exemple des figures 4 et 5, où les éléments analogues portent les mêmes références numériques, le système est reverrouillable, c'est-à-dire que, après mise à feu du générateur pyrotechnique 15, et par conséquent soulèvement du capot, il est possible de remettre celui-ci dans sa position initiale en reverrouillant le piston 13. Pour ce faire, le loquet 30 doit pouvoir revenir automatiquement dans sa position de départ, en regard des 25. C'est pourquoi, un ressort 42 est intercalé entre le loquet et le piston.

Dans ce mode de réalisation, la flexibilité des languettes 23 est simplement assurée par le fait que celles-ci ont une épaisseur plus faible que la jupe 36 du piston, à laquelle elles sont raccordées. Cette différence d'épaisseur définit deux épaulements 44 constituant la butée de fin de course du loquet 30. Le ressort 42 peut donc se comprimer (figure 5) dans la cavité 45 se situant entre les épaulements 44 et la paroi transversale 27 du piston.

De plus, les languettes flexibles 23 sont munies de butées arrières 46 sur lesquelles s'adosse le loquet sous la sollicitation du ressort 42. Avant déclenchement, la position du loquet est donc déterminée par ces butées arrières 46 et par le fait que le ressort applique le loquet contre ces butées.

Les figures 6 et 7 illustrent une mode de réalisation à une seule languette flexible 23a découpée dans une jupe tubulaire 47 du piston 13 par deux fentes longitudinales parallèles 49.

## Revendications

1. Vérin à course déclenchée pour système de sécurité comprenant un corps (12), un piston d'actionnement (13) mobile dans ce corps, des moyens de propulsion (15) dudit piston et un agencement de verrouillage (19) dudit piston coopérant avec une butée interne (21) pour l'immobilisation dudit piston dans une position prédéterminée, **caractérisé en ce que** cet agencement comprend un loquet (30) sous forme d'une rondelle cylindrique déplaçable vers le piston par lesdits moyens de propulsion dudit vérin pour la libération dudit piston, et au moins une languette flexible (23) rattachée à la périphérie du piston du côté desdits moyens de propulsion, comprenant un crochet (25) en prise avec ladite butée interne et **en ce que** ledit loquet (30) est déplaçable entre une position arrière où il est adossé audit crochet (25) en engagement avec ladite butée interne (21) et une position avant en direction d'une paroi transversale du piston où il est dégagé dudit crochet.

2. Vérin selon la revendication 1, **caractérisé en ce que** ledit agencement de verrouillage (19) comporte au moins deux languettes (23) disposées symétriquement par rapport à l'axe de déplacement du piston et formant un guide pour le déplacement dudit loquet (30).

3. Vérin selon la revendication 2, **caractérisé en ce que** ledit agencement déverrouillage comporte quatre languettes (23).

4. Vérin selon l'une des revendication 1 à 3, **caractérisé en ce que** lesdits moyens de propulsion sont constitués par un générateur pyrotechnique (15) logé dans le corps (12).

5. Vérin selon l'une des revendications 1 à 4, **caractérisé en ce qu'**une languette flexible (23) précitée comporte une zone amincie (35), facilitant sa flexion.

6. Vérin selon la revendication 5, **caractérisé en ce que** ladite languette (23) est raccordée à une jupe arrière (36) dudit piston par ladite zone amincie (35).

7. Vérin selon l'une quelconque des revendications précédentes, **caractérisé en ce que** ledit piston (13) comporte, en regard dudit loquet (30), une butée contre laquelle ledit loquet (30) vient s'appliquer en fin de course de déverrouillage.

8. Vérin selon la revendication 7, **caractérisé en ce que** cette butée (40) a une forme tronconique ou analogue, pour provoquer la rétention du loquet en fin de course de déverrouillage.

9. Vérin selon la revendication 7, **caractérisé en ce qu'**un ressort (42) est intercalé entre le loquet (30) et le piston (13) pour permettre un reverrouillage de celui-ci après déclenchement.

10. Vérin selon l'ensemble des revendications 2 et 9, **caractérisé en ce que** lesdites languettes flexibles (23) sont munies de butées arrières (46) sur lesquelles s'adosse ledit loquet sous la sollicitation dudit ressort.

11. Vérin selon l'une des revendications précédentes, **caractérisé en ce que** ledit loquet (30) comporte une jupe arrière (31).

## Claims

1. A triggered-stroke actuator for a safety system, the actuator comprising a body (12), an actuating piston (13) movable in the body, propulsion means (15) for propelling said piston, and a locking arrangement (19) for locking said piston, which arrangement co-operates with an internal abutment (21) to hold said piston stationary in a predetermined position, the actuator being **characterized in that** said arrangement comprises a latch (30) in the form of a cylindrical washer movable towards the piston by said propulsion means of said actuator in order to release said piston, and at least one flexible tongue (23) attached to the periphery of the piston beside said propulsion means, and including a hook (25) engaged with said internal abutment, and **in that** said latch (30) is movable between a rear position where it backs onto said hook (25) in engagement with said internal abutment (21), and a front position towards a transverse wall of the piston in which it is disengaged from said hook.

2. An actuator according to claim 1, **characterized in that** said locking arrangement (19) includes at least two tongues (23) disposed symmetrically about the travel axis of the piston and forming a guide for travel of said latch (30).

3. An actuator according to claim 2, **characterized in that** said locking arrangement has four tongues (23).

4. An actuator according to any one of claims 1 to 3, **characterized in that** said propulsion means are constituted by a pyrotechnic generator (15) housed in the body (12).

5. An actuator according to any one of claims 1 to 4, **characterized in that** an above-mentioned flexible tongue (23) includes a thin zone (35) facilitating bending thereof.

6. An actuator according to claim 5, **characterized in that** said tongue (23) is connected to a rear skirt (36) of said piston by said thin zone (35).

7. An actuator according to any preceding claim, **characterized in that** said piston (13) includes, facing said latch (30), an abutment against which said latch (30) comes to bear at the end of its unlocking stroke.

8. An actuator according to claim 7, **characterized in that** said abutment (40) is of frustoconical or analogous shape in order to cause the latch to be retained at the end of the unlocking stroke.

9. An actuator according to claim 7, **characterized in that** a spring (42) is interposed between the latch (30) and the piston (13) in order to enable it to be relocked after triggering.

10. An actuator according to claims 2 and 9 taken together, **characterized in that** said flexible tongues (23) are provided with rear abutments (46) against which said latch backs under thrust from said spring.

11. An actuator according to any preceding claim, **characterized in that** said latch (30) includes a rear skirt (31).

## Patentansprüche

1. Zylinder mit ausgelöstem Hub für ein Sicherheitssystem, umfassend einen Körper (12), einen in diesem Körper beweglichen Betätigungskolben (13), Mittel zum Antreiben (15) des Kolbens und eine Anordnung zum Verriegeln (19) des Kolbens, die mit einem Innenanschlag (21) zusammenwirkt, um den Kolben in einer vorbestimmten Position festzulegen, **dadurch gekennzeichnet, daß** diese Anordnung eine Klinke (30) in Form einer zylindrischen Scheibe umfaßt, die durch die Antriebsmittel des Zylinders für die Freigabe des Kolbens in Richtung des Kolbens bewegbar ist, sowie wenigstens eine an den Umfang des Kolbens auf der Seite der Antriebsmittel angesetzte flexible Zunge (23), die einen mit dem Innenanschlag in Eingriff befindlichen Haken (25) aufweist, und daß die Klinke (30) zwischen einer rückwärtigen Position, in der sie an dem mit dem Innenanschlag (21) in Eingriff befindlichen Haken (25) anliegt, und einer vorderen Position in Richtung einer Querwand des Kolbens, in der sie von dem Haken gelöst ist, bewegbar ist.

2. Zylinder nach Anspruch 1, **dadurch gekennzeichnet, daß** die Verriegelungsanordnung (19) wenigstens zwei Zungen (23) umfaßt, die in Bezug auf die Bewegungsachse des Kolbens symmetrisch angeordnet sind und eine Führung für die Bewegung der Klinke (30) bilden.

3. Zylinder nach Anspruch 2, **dadurch gekennzeichnet, daß** die Verriegelungsanordnung vier Zungen (23) umfaßt.

4. Zylinder nach einem der Ansprüche 1 bis 3, **dadurch gekennzeichnet, daß** die Antriebsmittel von einem in dem Körper (12) aufgenommenen pyrotechnischen Generator (15) gebildet sind.

5. Zylinder nach einem der Ansprüche 1 bis 4, **dadurch gekennzeichnet, daß** eine vorgenannte flexible Zunge (23) einen verjüngten Bereich (35) aufweist, der ihr Biegen erleichtert.

6. Zylinder nach Anspruch 5, **dadurch gekennzeichnet, daß** die Zunge (23) durch den verjüngten Bereich (35) mit einer hinteren Schürze (36) des Kolbens verbunden ist.

7. Zylinder nach einem der vorhergehenden Ansprüche, **dadurch gekennzeichnet, daß** der Kolben (13) gegenüber der Klinke (30) einen Anschlag aufweist, an dem die Klinke (30) in der Entriegelungsendstellung zur Anlage kommt.

8. Zylinder nach Anspruch 7, **dadurch gekennzeichnet, daß** dieser Anschlag (40) eine Kegelstumpfform oder ähnliche Form aufweist, um das Zurückhalten der Klinke in der Entriegelungsendstellung zu bewirken.

9. Zylinder nach Anspruch 7, **dadurch gekennzeichnet, daß** eine Feder (42) zwischen der Klinke (30) und dem Kolben (13) eingefügt ist, um ein erneutes Verriegeln dessen nach dem Auslösen zu ermöglichen.

10. Zylinder nach den Ansprüchen 2 und 9, **dadurch gekennzeichnet, daß** die flexiblen Zungen (23) mit hinteren Anschlägen (46) versehen sind, an denen die Klinke unter der Belastung der Feder anliegt.

11. Zylinder nach einem der vorhergehenden Ansprüche, **dadurch gekennzeichnet, daß** die Klinke (30) eine hintere Schürze (31) aufweist.
